# EUROPEAN PATENT APPLICATION

(11) **EP 3 621 014 A1**
(43) Date of publication of application: **11.03.2020**
(21) Application number: 18193463.9
(22) Date of filing: 10.09.2018
(51) Int. Cl.: G06Q 20/08, G06Q 40/02, G06Q 40/00

(54) **A METHOD, COMPUTER PROGRAM PRODUCT AND AN APPARATUS**

(71) Applicant: IPCO 2012 Limited, London EC4R 3AB (GB)
(72) Inventor: KENDALL, Christopher Paul, Buckinghamshire, LU7 9GA (GB); RUBBERT, Paul Edward, Essex SS9 2JD (GB)
(74) Representative: D Young & Co LLP

(57) **Abstract**

A method comprising: receiving a first instruction from a first user, the first instruction being an instruction to transfer to a first value from a first institution to a second institution;
receiving a second instruction from a second user, the second instruction being an instruction to transfer a second value from the second institution to the first institution, wherein the first value is greater than the second value; calculating the difference between the first value and the second value; and comparing the calculated difference to a predetermined amount, wherein if the calculated difference is greater than the predetermined amount, the method comprises: automatically notify the second institution.

## Description

### BACKGROUND

### Field of the Disclosure

The present invention relates to method, computer program product and an apparatus.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

Modern electronic systems allow values to be electronically transferred between user accounts of different institutions using electronic transaction request messages (instructions). Such a method of transferring values is both secure and convenient. The method is secure as it makes use of various known security protocols which allow secure transfer of data over a network and it is convenient as it allows account holders to make requests to transfer funds at any time, 24 hours a day, 365 days a year.

However, although such instructions may be made at any time, values (or funds) are only actually transferred between institutions (such as banks) on a periodic basis. During each period, transaction messages issued by banks are received and recorded. Then, at the end of the period, funds are actually transferred between banks (this is known as "settlement"), or are cleared with settlement finality meaning that they are settled immediately or at some time in the future. These are carried out on the basis of the recorded transaction messages. The time period between the periodic cycles is typically 8, 12 or 24 hours, although any other suitable time period may be used. Indeed, it is now desirable to have very short time periods.

During the period as the instructions are being received, the funds which will be provided by an institution (such as a bank) at the end of the period are compared to the bank's liquidity. In other words, it is a regulatory requirement to check that the bank has sufficient liquidity to provide the funds at the end of the period.

This means that the institution needs to carefully monitor its liquidity level during the periodic cycle. This is because for incoming instructions to be honoured at the end of the periodic cycle, it is not possible for institutions to exceed their liquidity level. It may be particularly difficult to ensure sufficient liquidity in the context of High Value Payments, where the value of the transaction between two parties is very high compared to the liquidity available to the bank. In other words, the asynchronous and variable nature of the received electronic messages pertaining to transactions (of High Value or not) means that the liquidity levels need to be carefully monitored.

There is thus a need to carefully monitor liquidity levels.

Additionally, in many instances, the length of the periodic cycle is set by the regulator of the institutions to ensure the smooth running of the banking system. Therefore, the periodic cycle is inflexible and may be a short period or may be a long period. In the instance of a long periodic cycle, a very high level of liquidity level for the institution is required. This is undesirable.

Therefore, embodiments of the present disclosure aim to alleviate at least one of the above problems.

### SUMMARY

According to embodiments of the disclosure, there is provided a method comprising: receiving a first instruction from a first user, the first instruction being an instruction to transfer to a first value from a first institution to a second institution; receiving a second instruction from a second user, the second instruction being an instruction to transfer a second value from the second institution to the first institution, wherein the first value is greater than the second value; calculating the difference between the first value and the second value; and comparing the calculated difference to a predetermined amount, wherein if the calculated difference is greater than the predetermined amount, the method comprises: automatically notify the second institution.

This is advantageous because an automatic notification process is provided. Specifically, a condition is set such that in the event that a predetermined amount is exceeded by the value which is to be transferred from a second institution, the second institution is automatically notified. This automatically alerts the second institution to the possibility that they may not be able to transfer the value.

The method may further comprise selecting the first value and the second value from a plurality of other values, the selection being based on the difference between the first value and the second value being the lowest compared to the other values.

This is advantageous as this reduces the likelihood of the second institution being notified as the difference between the first and second value is the smallest amount. By reducing this likelihood, data around a network is reduced.

The method may further comprise delaying the notification to the second institution by a predetermined period of time.

This is advantageous as it allows other transactions to be received which may mean that the likelihood of a notification being sent is reduced.

The first value and second value may be monetary values and the predetermined amount may be the liquidity value of the second institution.

The first instruction and the second instruction may be a subset of a batch of instructions, the method may comprise: filtering the batch of instructions based upon the identity of the institution from which the instruction originates.

This reduces the number of transactions to be analysed which reduces the processing requirements.

The method may further comprise: applying a mapping to the first instruction and the second instruction, the mapping identifying the first institution and the second institution; and filtering the batch of instructions based upon the mapping.

This reduces the number of transactions to be analysed.

The method may further comprise: sorting the filtered batch of instructions based upon the value.

This allows the closest value of transactions to be quickly established. This reduces processing requirements.

Corresponding computer program and computer program product embodiments are envisaged.

Additionally, an apparatus is envisaged in embodiments. The apparatus comprises communication circuitry and processing circuitry, the processing circuitry being configured to: receive, via the communication circuitry, a first instruction from a first user, the first instruction being an instruction to transfer to a first value from a first institution to a second institution; receive, via the communication circuitry, a second instruction from a second user, the second instruction being an instruction to transfer a second value from the second institution to the first institution, wherein the first value is greater than the second value; calculate the difference between the first value and the second value; and compare the calculated difference to a predetermined amount, wherein if the calculated difference is greater than the predetermined amount, the processing circuitry being configured to: automatically notify the second institution

The foregoing paragraphs have been provided by way of general introduction, and are not intended to limit the scope of the following claims. The described embodiments, together with further advantages, will be best understood by reference to the following detailed description taken in conjunction with the accompanying Figures.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Fig. 1 shows various components of a device according to an embodiment;
Fig. 2 shows a flow chart describing embodiments of the disclosure;
Fig. 3 shows a more detailed version of process 300 according to embodiments;
Fig. 4 shows a bilateral algorithm message notification from Fig. 3;
Fig. 5 shows a gross algorithm message notification from Fig. 3;
Fig. 6 shows a multilateral algorithm message notification from Fig. 3;
Figs. 7A and 7B show the release algorithm from Fig. 3;
Fig. 8 shows a promotion algorithm from Fig. 3;
Fig. 9 shows a bilateral release algorithm of Fig. 3;
Fig. 10 shows a gross release algorithm of Fig. 3;
Fig. 11 shows a multilateral release algorithm of Fig. 3; and
Fig. 12 shows a promotion check algorithm.

### DESCRIPTION OF THE EMBODIMENTS

Referring now to the drawings, wherein like reference numerals designate identical or corresponding parts throughout the several views.

### General Overview of System

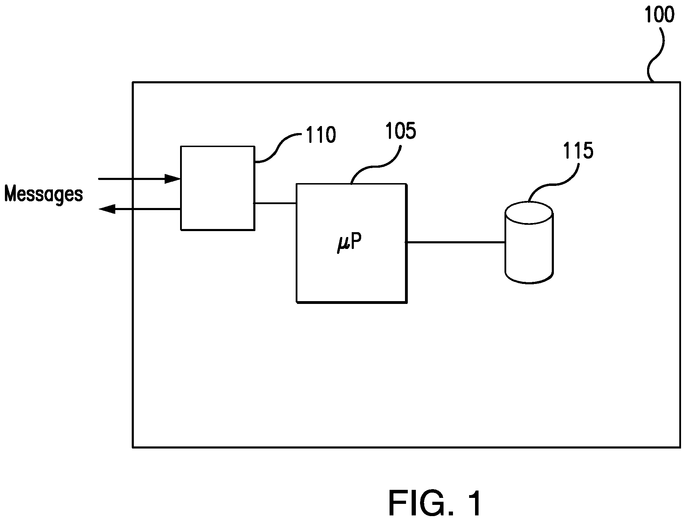

Fig.1 shows an overview of an electronic network device 100 according to an embodiment.

The device 100 is comprised of a processor 105 that controls the operation of the device 100. The processor 105 may be of the form of circuitry that uses computer readable code to operate. The computer readable code may be stored within the device 100 in storage 115. The storage 115 may be optically or magnetically readable or may be solid-state storage. The storage 115 may be located within the device 100 or may be located remotely from the device 100.

Also attached to the processor 105 is an interface 110. The interface 110 may again be of the form of circuitry. The interface 110 may receive messages over a network, such as a local area network or a wide area network. However, the disclosure is not so limited. The interface 110 may receive messages from another part of a system of which the device 100 forms a part. In other words, the device 100 may be a virtual machine within a larger computer system.

For example, in embodiments of the disclosure, the device 100 is configured to receive transaction messages associated with a payment system. The device 100 may be thus part of the payment system (as a plugin component) or may be separate to the payment system.

In particular, but not exclusively, the device 100 is configured to receive messages from, or be part of, a payment system described in WO2016/097675, the content of which is incorporated herein by reference. Of course, the disclosure is not so limited and the transaction messages may be received from any payment system such as the Banker's Automated Clearing System (BACs), or the Faster Payments System in the United Kingdom. The format and structure of these payment messages are known to the skilled person and will not be described any further.

As noted in the introduction, during the periodic cycle, the liquidity of the various institutions (such as financial institutions like banks) between which funds are transferred has to be monitored. This ensures that the institutions have sufficient liquidity to transfer the funds to the various other institutions at the end of the period. It is desirable to therefore monitor and manage the liquidity provided by a financial institution.

The volume of transactions received from the financial institutions is very high and asynchronous in nature. This means it is not possible to monitor the liquidity levels manually.

In addition, where the total amount of funds to be transferred from an institution will exceed or will be too close to the liquidity level, then the institution may be automatically notified. This allows the institution to be automatically made aware of the issue and for the institution to take corrective action by, for example, providing more liquidity. Alternatively, the mechanisms according to embodiments may mitigate the requirement for providing additional liquidity as will become apparent.

In more general terms, the apparatus according to embodiments of the disclosure receives a first instruction from a first user, the first instruction being an instruction to transfer to a first value from a first institution to a second institution. In embodiments, the instruction may be a transaction request message. The apparatus then receives a second instruction from a second user, the second instruction being an instruction to transfer a second value from the second institution to the first institution, wherein the first value is greater than the second value. The second instruction may be the same as the first instruction or may be different.

The apparatus according to embodiments then calculates the difference between the first value and the second value; and then compares the calculated difference to a predetermined amount. In embodiments, the predetermined amount may be liquidity of the second institution. Of course, the disclosure is not so limited and may be any amount. If the calculated difference is greater than the predetermined amount, the apparatus will automatically notify the second institution. This notification may be provided as a message sent through the system of Fig. 1 or may be provided by any other mechanism such as via a channel which is not part of the system of Fig. 1. This notification may also be provided to a regulator of the institution to assist the regulator in monitoring institutions.

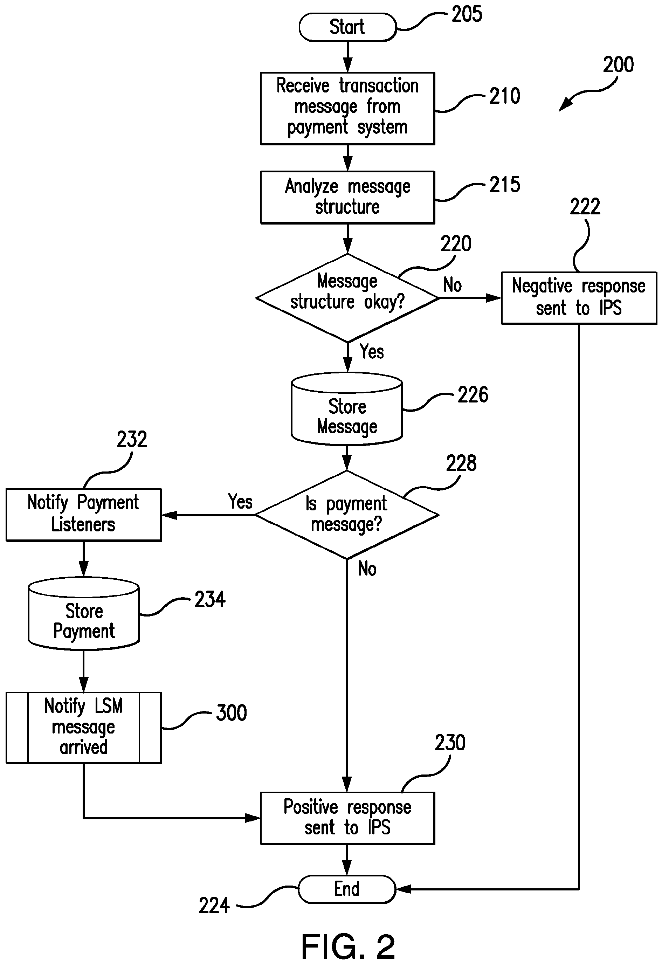

Referring to Fig. 2, a flow chart describing embodiments of the disclosure is provided. Specifically, the embodiment of Fig. 2 describes a High Value Payment System (HVPS) that will be embodied within the device 100. The HVPS will typically be software code stored on storage 115 and will be run by processor 105. The HVPS receives messages pertaining to individual transactions that can have a significant impact on liquidity of a financial institution. For example, in business to business transactions, many millions of Pounds may be transferred from one user to another in a single transaction. In another example, many property purchases occur on a Friday around lunchtime. Each of these high value transactions can have a significant impact on a bank's liquidity.

By receiving High Value Payments (for example transactions above a predefined limit of say, £50,000 or any appropriate amount), only transactions having a significant impact on an institution's liquidity are considered. This reduces the processing requirements within the device 100. However, it will be appreciated that the disclosure is not limited to only High Value Payments and may be applied to all transaction irrespective of the amount of the transaction.

As noted above, in embodiments, the process will be performed on the processor 105 using computer code stored within the storage 115. The process 200 starts at step 205. The process then moves to step 210. In step 210 the message pertaining to the high value payment is received from the payment system such as that described in WO2016/097675, the BACs or Faster Payment System. For example, the message may pertain to a transaction whose value exceeds the predetermined limit, such as £50,000 as noted above. This predetermined limit may be a fixed amount or may be a percentage of the total liquidity of the institution. For example, if one institution has a liquidity level that is five times larger than the liquidity level of a second institution, the monetary value of the predetermined limit applied to the second institution may be 1/5^{th} the monetary value of the limit applied to the first institution.

In the case where the message meets the specific criterion, and so the transaction is a High Value Payment Instruction, the message passed to device 100 for processing.

The process then moves to step 215 where the message structure is analysed. In this step, the message is structurally and syntactically validated. In other words, the message is checked to ensure that it still complies with a predetermined standardised format for use with the payment system from which the message originates (for example, the standardised format ISO20022). It should be noted that this double check is carried out to reduce the likelihood of corruption of the message occurring as the message is passed from the payment to the device according to embodiments of the disclosure. This additional check ensures data integrity.

The process then moves to step 220 where the result of the validity check is determined. In the event that the message is not validated (i.e. the message no longer complies with a predetermined standardised format), the "no" path is followed to step 222 where a negative response is returned to the originating payment system. The originating payment system may choose to then re-send the message or may process the message in a different manner. In any event, with regard to the received message, the process ends at step 224.

Returning to step 220, in the event that the message is validated, the "yes" path is followed to step 226 where the message is stored. The message is stored in storage 115.

The stored message is then retrieved and checked in step 228. The check in step 228 ensures that the message is a High Value Payment transaction instruction. In other words, in step 228, the message is analysed to validate that the message is a payment message (rather than an echo response from the payment system or some other control message) and that the payment message is a High Value Payment transaction instruction and thus meets with the specific criterion indicating the message is a High Value Payment as mentioned above.

In the event that the message is not a High Value Payment message (i.e. is not a payment message or is a payment message that does not meet the specific criterion), the "no" path is followed to step 230 where a response is sent to the originating payment system. This response indicates to the originating payment system that the message is not a High Value payment message and so will not be processed in the device 100 according to embodiments. This check ensures that only messages pertaining to appropriate transactions are processed by the device 100 and thus reduces storage and wasted processing time and power.

In the event that the message is a message payment is a High Value Payment message (i.e. is a payment message that does meet the specific criterion), the "yes" path is followed to step 232. In step 232, a payment notification is generated and sent to the originating payment system and the Liquidity Saving Module processed by the device 100 as will be explained. Of course, the payment notification may be sent to any so-called "payment listener" as would be appreciated.

The process then moves to step 234 where the message is stored in storage 115. It should be noted here that the message stored in step 234 is stored in addition to the message stored in step 226. The message stored in step 226 is the message received in its raw form and will include non-payment messages and payment messages that do not conform to the High Value criterion. However, those messages stored in step 234 are only payment messages that do conform to the High Value criterion.

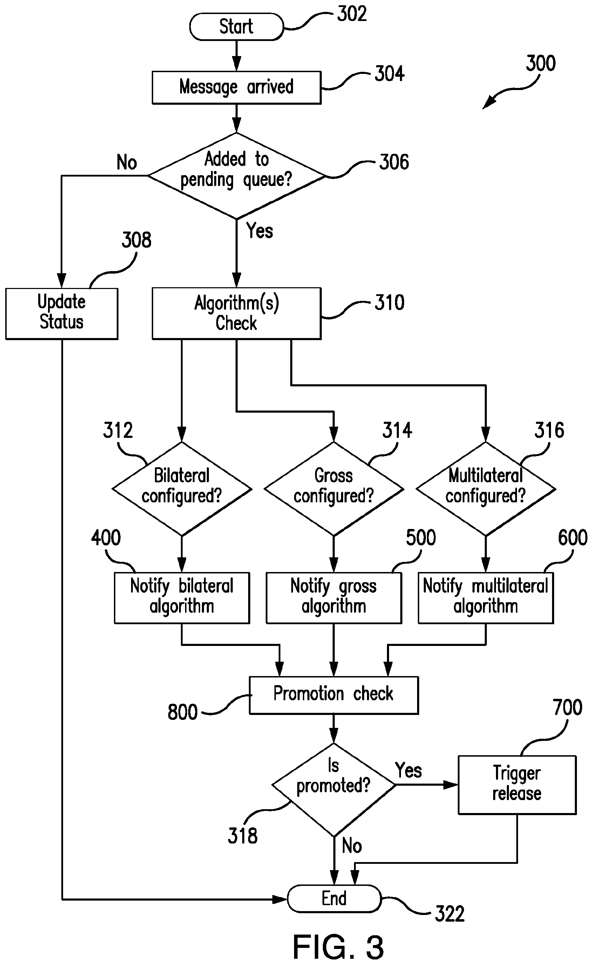

The process then moves to step 300 where the stored message is used in process 300. Process 300 is described with reference to the embodiment of Fig. 3.

Process 300 described in the embodiment of Fig. 3 indicates that the transaction pertaining to the message has been settled and the funds between the banks transferred. In other words, it is a notification of a payment message arriving.

The process then ends at step 224.

Fig. 3 shows a more detailed version of process 300 according to embodiments which reduces the risk that an institution will exceed its liquidity value (or any other predetermined amount). This process also provides the advantage, as will be explained, of providing an automatic notification which may include notification to the institution if the predetermined amount will be exceeded.

The process starts at step 302.

In step 304, the process determines if the electronic message has arrived. In other words, the process listens to see if a message arrives at block 300 in Fig. 2. After a message has arrived, the process then moves to step 306 where the message is added to the pending message queue. This message queue may be implemented in a message queue in storage 115. This may include, but not be limited to, internal memory queues.

The pending message queue contains all of the messages received at block 300 irrespective of the priority associated with the transaction pertaining to the message. In embodiments, the message may be prioritised according to the priority levels associated with the ISO20022 standard. For example, the priority code within the ISO20022 standard allows a transaction to be prioritised as Urgent, High or Normal. An urgent transaction must be settled immediately (or at least with very little delay, for example 5 seconds or 2 minutes), a high priority transaction must be settled within one or two hours and a normal priority transaction must be settled within six to eight hours. Of course, the disclosure is not so limited and the time period defined for each priority may be varied through configuration of the device 100.

Of course, the disclosure is not so limited and any appropriate priority levels may be chosen.

At this stage (step 306) a check is also made of the unique identifier of the newly arrived message. The unique identifier of the message is allocated by the Payment System from which the message is received. If the unique identifier of the newly arrived message is the same as a message already placed on the queue, the "no" path is followed to step 308 where the status of the existing electronic message on the pending queue is updated rather than the newly arrived message being added to the message queue. This is advantageous because it reduces duplicate processing of messages which is computationally efficient.

Many examples exist of an updated status. For example, if the financial institution has cancelled the payment.

In this case, after the existing electronic message transaction has been updated, the process moves to step 322 where the process ends.

Returning back to step 306, if the unique identifier of the newly arrived message does not match a message already on the message queue, the message is added to the pending queue.

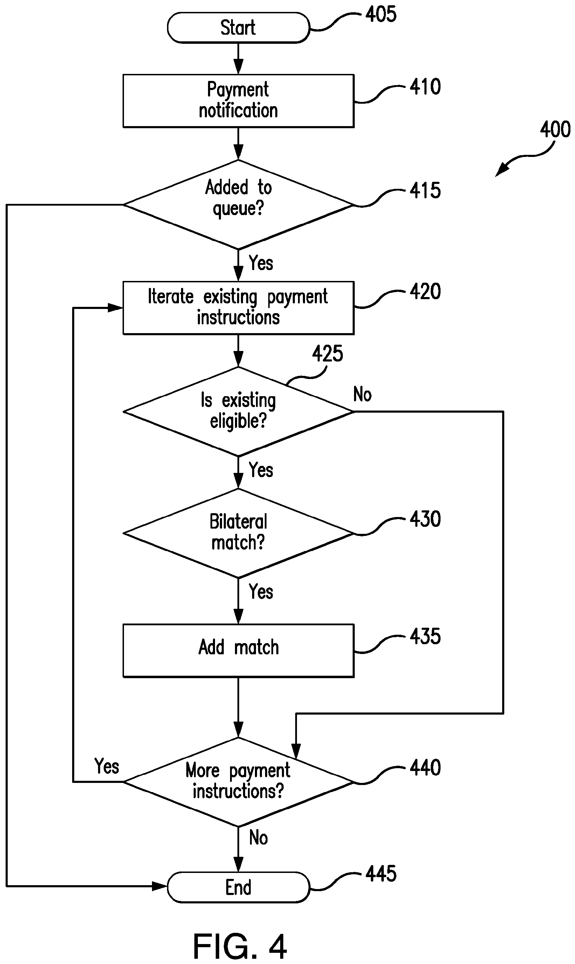

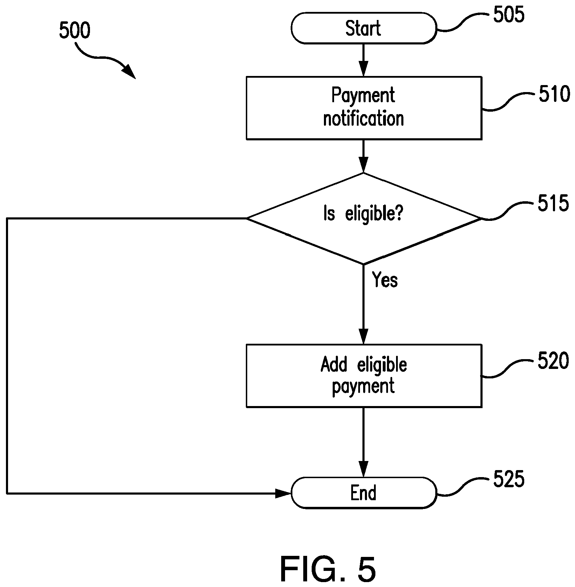

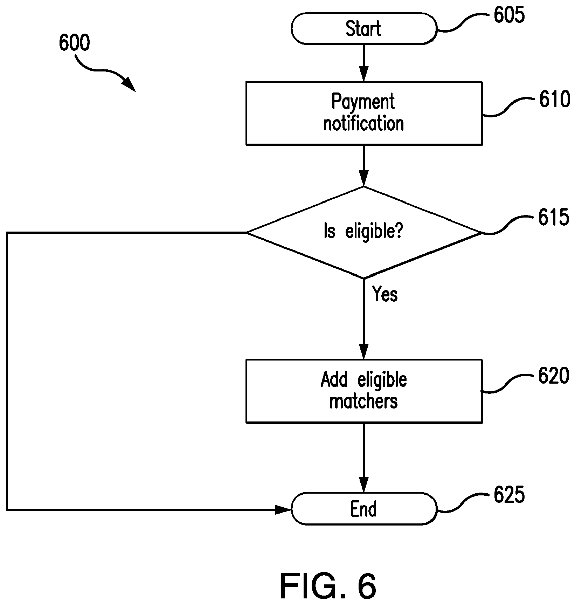

In this case, the process follows the "yes" path to step 310 where the arrival of a new pending message is notified to one or more of three algorithms. The three algorithms are:
1) the bilateral algorithm which continually and asynchronously receives payment notifications and builds matching payment trees against all existing payment instructions. This will be described with reference to Fig. 4;
2) the gross algorithm which continually and asynchronously receives payment notifications and checks each message individually against the debitor liquidity. If, during a release, there is sufficient liquidity, then the payment is added to a clearing list and the debitor and creditor balances are updated straightaway so that they may be used in the next payment. This clearing list is netted which reduces the amount of required debitor and creditor liquidity. This will be described in Fig. 5;
3) the multilateral algorithm which continually and asynchronously receives payment notifications and attempts to net all outstanding payment instructions contained in the queued messages together resulting in net movements between a collection of institutions. If, during a release, any of the participants have insufficient liquidity, then none of the payment instructions can be cleared. This algorithm allows alternative multilateral rules which provide complex selection of payments contained within the messages. This will be described in Fig. 6.

The notification to the three algorithms may be a sequential notification. In other words, the arrival of the message may be first notified to a first of the algorithms and if that first algorithm is configured, the message may be processed by that first algorithm. However, if that first algorithm is not configured then the message is notified to a second of the algorithms and so on.

Of course, the disclosure is not so limited and the notification may be sent to all algorithms simultaneously. This is the situation disclosed in Fig. 3. It is advantageous to send the notification to all of the algorithms simultaneously to allow the algorithms to process the newly arrived message straightaway. This is especially advantageous in an asynchronous system because it reduces the time between the receipt of the message and the issuance of a notification regarding lack of liquidity according to embodiments.

Returning to Fig. 3, after notification of the message in step 310, the process then moves to step 312, 314 and 316 simultaneously where it is determined whether the bilateral algorithm, the gross algorithm and the multilateral algorithm has been configured.

If the bilateral algorithm has been configured, the "yes" path is followed to step 400 where the bilateral algorithm is provided with the newly arrived message. This will be explained later in Fig. 4.

If the gross algorithm has been configured, the "yes" path is followed to step 500 where the gross algorithm is provided with the newly arrived message. This will be explained later in Fig. 5.

If the multilateral algorithm has been configured, the "yes" path is followed to step 600 where the multilateral algorithm is provided with the newly arrived message. This will be explained later in Fig. 6.

It should be noted that any one or more of the bilateral algorithm, the gross algorithm and the multilateral algorithm may be configured.

During the notification of the message to one or more of the bilateral algorithm, the gross algorithm and the multilateral algorithm, the message will be added to the messages already present in the algorithm.

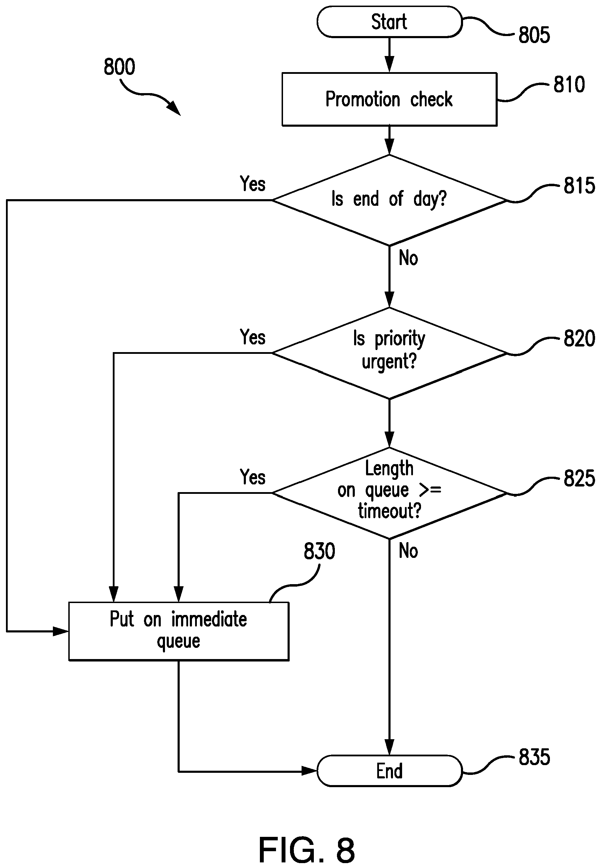

The process then moves to step 800. In step 800, a check is made on the newly arrived electronic message to determine if that message is subject to a promotion within the pending queue. This will be explained later with reference to Fig. 8. Basically, if the electronic message is subject to a promotion, the message will be copied onto a different message queue. Again, this different message queue may be implemented on storage 115 or as internal memory within device 100. This different message queue is a pending immediate payment message queue and as will be described with reference to Fig. 8 and includes messages whose priority is Urgent within the ISO20022 Standard or are messages which comply with one or more other non-limiting promotion criterion which will be explained later. Accordingly, the electronic message subject to promotion exists on two message queues; the pending message queue of step 306 and the pending immediate payment message queue. However, an electronic message not subject to promotion will exist only on the pending message queue.

The output of the promotion process 800 is fed to step 318.

In the event that the message has not been promoted, the "no" path is followed to step 322.

In the event that the message has been promoted (and so will be copied onto the pending immediate payment message queue), the "yes" path is followed to step 700. In step 700, a trigger release mechanism is carried out. The trigger release process is the process using which a number (or batch) of messages are released meaning that the transactions associated with the messages are cleared by the payment system. The messages that have been released are removed from the pending message queues (i.e. they are removed from the pending message queue and the pending immediate payment message queue).

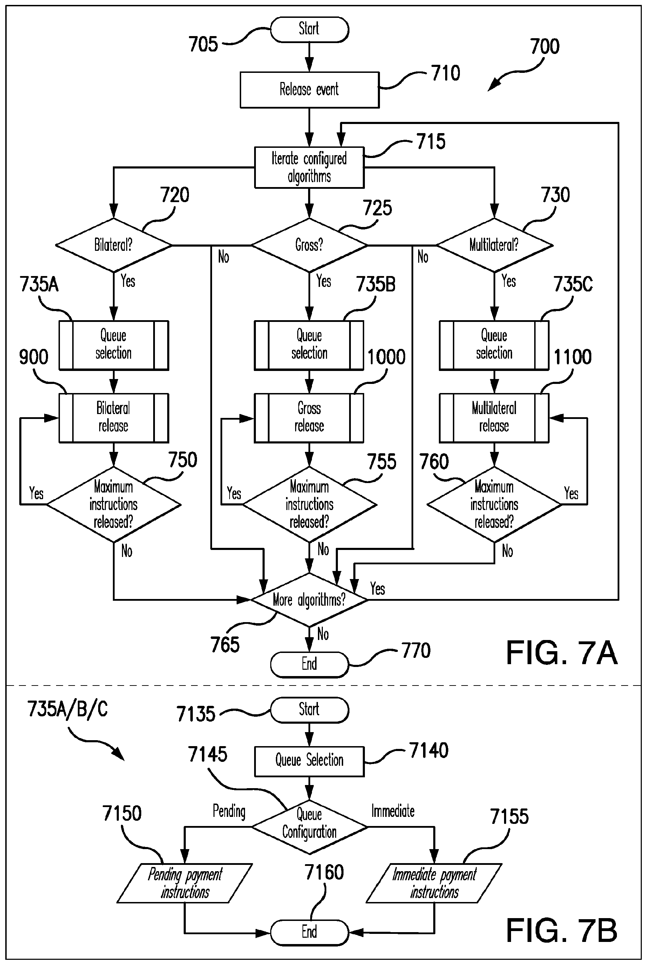

The trigger release process 700 is described with reference to Fig. 7.

The process then ends at step 322.

Referring to Fig. 4, the bilateral algorithm message notification 400 is described.

The purpose of the bilateral algorithm is to identify any transactions associated with messages already on the message queue that may be matched with a newly arrived message. Specifically, if the newly arrived message is associated with a transaction going from Bank A to Bank B, the bilateral algorithm iterates through the existing messages on the pending message queue to identify if there is stored a message associated with a transaction going from Bank B to Bank A. In this case, the transaction from Bank B to Bank A is used to offset the transaction from Bank A to Bank B. In other words, if the transaction from Bank A to Bank B is greater than the transaction from Bank B to Bank A, Bank A only needs to provide the liquidity for the difference in the transaction values. This netting of the transactions reduces the amount of liquidity required by Bank A. In other words, in Fig. 4 the received messages are sorted according to the source and destination financial institution. This increases the speed of processing within the system as will be described later.

The process starts in step 405.

In this case, the mechanism described with reference to Fig. 3 notifies the bilateral algorithm that message has arrived on the pending message queue. The process then moves to step 410 where this message is received within the algorithm.

At this stage, a mapping key is attributed to the message. Specifically, in the situation where a transaction involves Bank A and Bank B (irrespective of whether the transfer of funds is from Bank A to Bank B or from Bank B to Bank A), the mapping key that will be attributed to the message will be AB. Accordingly, by attributing this mapping key, the device 100 will be able to filter transactions using less processing power. In other words, the processing circuitry 105 will be able to review only those transactions involving Bank A and Bank B when trying to find a match. This allows the transactions to be filtered more quickly allowing the liquidity to be checked more quickly and automatic notifications issued more quickly.

The process moves to step 415 where the message is added to a pending message queue within the bilateral algorithm. The pending message queue includes all messages that have been received since the last release event and any message that was not released previously. It should be noted here that the message is copied to the pending message queue within the bilateral algorithm. This allows a snap shot of the messages received between release events to be captured. In other words, the pending message queue within the bilateral algorithm contains all messages that have been received since the last release event and any message that was not released previously. It is important to note that during a release event, the bilateral algorithm is configured to process either all pending messages or just the received messages for immediate payment. This means that during the release event, the bilateral algorithm may attempt to process all messages copied to the pending message queue or only those that require immediate payment. During the release event, the bilateral algorithm will attempt to match any payment received. For example, if only the immediate payments are being processed, then the bilateral algorithm will attempt to match the immediate payment against any pending message (for immediate payment or otherwise).

In step 415, a further check is carried out. Specifically, if the unique identifier of the message is the same as the unique identifier of a message already on the pending message queue within the bilateral algorithm, the process moves to step 445 where the process ends. This stops the transaction associated with the message being processed twice.

On the other hand, in the event that the unique identifier of the message is not the same as the messages already on the pending message queue, the message is determined to be newly added to the pending message queue. In this case, the "yes" path is followed to step 420.

In step 420, the previously stored electronic messages within the bilateral algorithm are iterated. Specifically, each message already on the pending message queue within the bilateral algorithm is reviewed by the bilateral algorithm message notification process 400 to establish whether the transactions associated with these existing messages stored on the message queue may be matched with the transaction associated with the newly received message.

Firstly, with regard to the first existing message to be tested, the process determines whether that first existing message is eligible to be matched against the newly arrived message. This occurs in step 425. Specifically, and in a non-limiting fashion, the first existing message is checked to see if the status of the existing message indicates that the transaction associated with the message has been matched with a previous transaction. If the first existing message has been previously matched, the first existing message is not eligible for bilateral matching and therefore the process moves to step 440.

In step 440, a check is made to determine if other messages exist on the pending message queue. If there are other messages stored on the pending message queue, the "yes" path is followed to step 420 where the process iterates to a second existing message. If there are no further messages on the message queue, the "no" path is followed to step 445 where the process ends.

In the event that the first existing message is eligible to be matched in step 425, the process moves to step 430 where it is determined whether the transaction associated with the first stored message is a bilateral match to the transaction associated with the newly arrived message.

The important point with a bilateral match is that the transaction associated with the existing message must be in the opposite direction to the transaction associated with the newly arrived message. In other words, if the transaction associated with the newly arrived message is from Bank A to Bank B, for a bilateral match to occur, the transaction associated with the existing message must be from Bank B to Bank A. It should be noted here that any bilateral match will reduce the liquidity requirements irrespective of the amount of the respective transactions.

As noted above, in order to increase the speed of the bilateral match, the mapping key associated with the newly arrived message is compared to the mapping key associated with messages already existing on the bilateral message queue. This allows the messages already existing on the bilateral message queue to be filtered by mapping key. In other words, only messages already on the pending queue having the same mapping key as the newly arrived message will be checked for a bilateral match. This reduces the number of messages to be checked and consequently reduces computational resource.

If the transaction associated with the existing message is not in the opposite direction, the process moves to step 440 where the next message is checked (if another message exists on the pending queue).

However, if the appropriate direction of transaction has been established, the algorithm then must decide if this first existing message should be used as a bilateral match.

In this case, the process moves to step 435, where the first existing message is added to a list of potential matches. At this stage, the list of potential matches is sorted with respect to the newly arrived message. In embodiments, the potential matches are sorted by difference with respect to the newly arrived message. For example, if the newly arrived message is for a transaction of 10 USD from Bank A to Bank B, and there were three potential matches going from Bank B to Bank A of 7 USD, 5 USD and 9 USD, the three potential matches would be ordered 9 USD, 7 USD and 5 USD (a difference with respect to the newly arrived message of 1 USD, 3 USD and 5 USD). However, the disclosure is not so limited and the list may be sorted with respect to any criterion.

After the check for a bilateral match has been performed on the first existing message, the process then moves to step 440 where it is determined if there are any further existing messages to check against the newly received message.

If there are further existing messages to check, the "yes" path is followed and the process then returns to step 415. On the other hand, if there are no further existing messages to check, the "no" path is followed to step 445 where the process ends.

Referring to Fig. 5, a flowchart 500 explaining the gross algorithm message is provided. The process starts at step 505. The process then moves to step 510 where the newly received message is provided to the gross algorithm. The process then moves to step 515 where the newly received message is checked to see if it is eligible to be applied to a gross algorithm message queue.

In a similar manner to the bilateral algorithm message queue, the gross algorithm message queue stores the pending messages in the gross algorithm.

Additionally, within the gross algorithm and similar to the bilateral algorithm, during the release event, the gross algorithm may review messages copied to either the pending message queue or just the immediate message queue within the gross algorithm.

In one example, the unique identifier applied to the newly received message is checked against the unique identifiers of the existing messages stored in the gross algorithm pending message queue. Where the unique identifier of the newly received message is the same as the unique identifier of an existing message on the gross algorithm pending message queue, the newly received message will not be eligible for use by the gross algorithm. This is to reduce the likelihood of using the newly received message in reducing the liquidity multiple times.

In the event that the newly received message is not eligible to be applied to the gross algorithm, the "no" path is followed to step 525 where the gross algorithm process ends.

On the other hand, if the newly received message is eligible for the gross algorithm, the "yes" path is followed to step 520. In step 520, the newly received message is added to the gross algorithm pending message queue of other messages pending in the gross algorithm. In addition, the newly received message may be added to the gross algorithm immediate message queue in a similar manner to that described in Fig. 4. The process then continues and ends at step 525.

Referring now to Fig. 6, a flowchart 600 is shown explaining the multilateral algorithm message notification process.

The process starts in step 605. The process then moves to step 610 where the newly received message is provided to the multilateral algorithm.

At this stage, a mapping key (similar to that of the bilateral algorithm) is attributed to the message. Specifically, in the situation where a transaction involves Bank A and Bank B (irrespective of whether the transfer of funds is from Bank A to Bank B or from Bank B to Bank A), the mapping key that will be attributed to the message will be AB. Similar to the situation with the bilateral algorithm, by attributing this mapping key, the device 100 is capable of filtering transactions more quickly and with less processing power. This allows the liquidity to be checked more quickly and notifications issued more quickly.

The process then moves to step 615 where a check is performed to determine whether the received message is eligible for use in the multilateral algorithm. One example of this check is to determine, using the unique identifier, if the newly received message already exists on the message queue as described above with reference to the bilateral algorithm and the gross algorithm.

If the newly received message is not eligible for use in the multilateral algorithm, the "no" path is followed to step 625 where the process ends.

On the other hand, if the newly received message is eligible, the "yes" path is followed to step 620 where the electronic message transaction is added to the multilateral pending queue. In a similar manner to the bilateral algorithm message queue and the gross algorithm message queue, the multilateral algorithm message queue stores the pending messages in the multilateral algorithm in a pending queue.

In a similar manner to the bilateral algorithm above, the multilateral algorithm matches the newly received message to other messages stored within the multilateral queue. However, in the multilateral case, messages associated with transactions involving other banks are matched. As an example, a transaction going from Bank A to Bank B may be matched with two transactions; a first going from Bank A to Bank C and a second going from Bank C to Bank B. The multilateral algorithm therefore has the capability of reducing the liquidity requirements of any one particular bank efficiently. By reducing the liquidity requirements, the likelihood of the device 100 issuing an automatic notification is reduced. This ultimately reduces the amount of data passed between the device 100 and the payment system.

The process then moves to step 625 where the process ends.

Referring now to Fig. 7A, a process explaining the release mechanism 700 shown in Fig. 3 is described.

The process 700 starts at step 705. The process then moves to step 710 where a release event is determined. A release event may be any event that is determined appropriate to trigger a release. For example, in embodiments, a bank increasing its liquidity funds may trigger a release. Other events including a message being promoted onto the immediate payment queue may trigger a release.

The process then moves to step 715 where the system iterates between the different algorithms. In other words, in step 715, the release mechanism moves from the release of the bilateral algorithm to the release of the gross algorithm and finally to the release of the multilateral algorithm. It should be noted that the order of the release is configurable and may be, for example, bilateral, multilateral then gross algorithm.

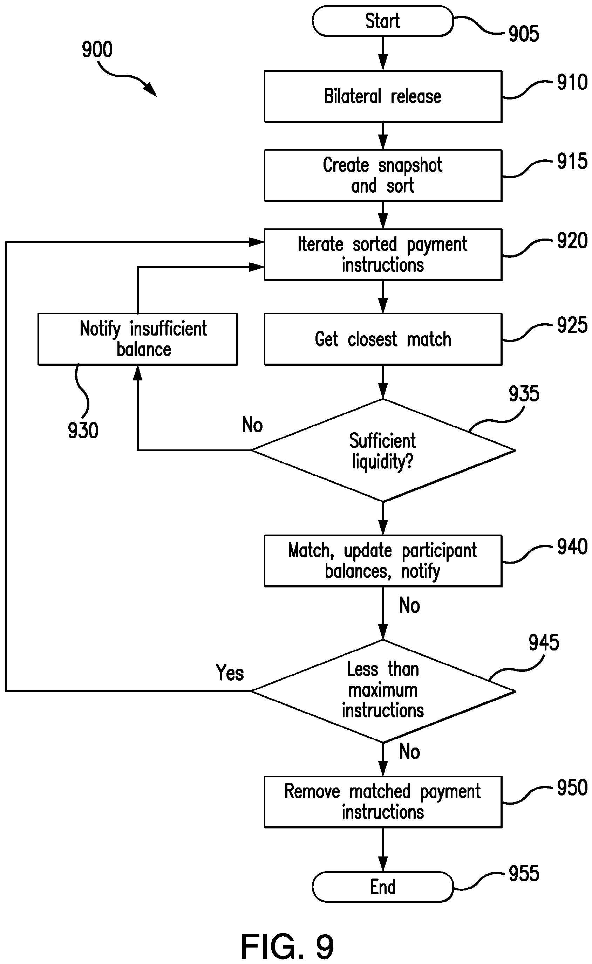

Starting with the left-hand flowchart, there is a check to determine if the bilateral algorithm 720 is configured. In the event that the bilateral algorithm is configured in step 720, the "yes" path is followed to step 735A. In step 735A, the bilateral queue selection process of Fig. 7B is performed. After the bilateral queue selection process of Fig. 7B has been performed, the process moves to step 900 where a bilateral release algorithm is performed. This will be explained with reference to Fig. 9. The output from the bilateral release algorithm in step 900 is a batch of messages that have been matched.

The process then moves to step 750. The purpose of step 750 is two-fold. Firstly, the messages in the batch are cleared. In other words, the messages identified in the batch of messages output from step 900 are sent for clearing and so will be either settled immediately or at some point in the future. Secondly, it is determined if the maximum number of received messages within a single batch output from the bilateral algorithm will be released for clearing. This step is provided to ensure that the processing resource within the device 100 is managed as a release of a batch of messages requires settlement of the transactions associated with those messages.

In the event that the maximum number of message will be released, the "yes" path is followed to step 900 where the bilateral release algorithm is run again. In other words, when the maximum size of batch has been reached and that batch has been released, a second batch of messages is to be processed for release.

On the other hand, in the event that the maximum number of messages has not been released, the "no" path is followed to step 765. In step 765, the release process associated with the next algorithm (i.e. the gross or multilateral algorithm) is carried out.

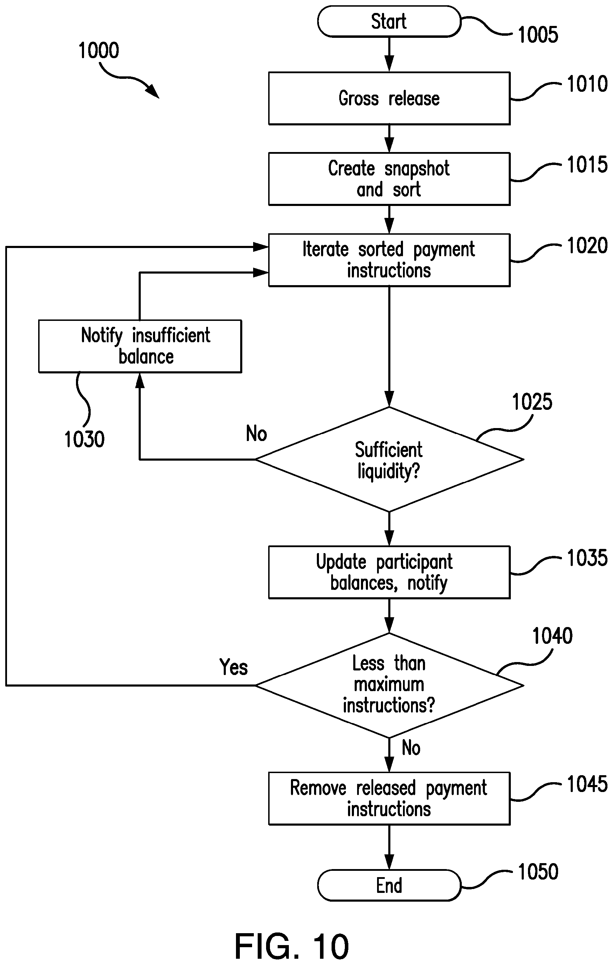

In this case, the gross algorithm is checked. Accordingly, the process moves from step 715 to step 725 where the system checks whether the gross algorithm is configured. In the event that the gross algorithm is configured, the process moves along the "yes" path to step 735B. The gross algorithm queue is then selected as will be described with reference to Fig. 7B. The process then moves to step 1000 where it is determined whether or not the gross algorithm should release the stored messages. This will be explained later with reference to Fig. 10.

The process then moves to step 755 where, similarly to the bilateral algorithm, the messages in the batch are cleared and it is determined if the maximum number of messages have been cleared for release. In the event that the maximum number of messages have been cleared for release, the "yes" path is followed to step 1000.

On the other hand, in the event that the maximum number of messages has not been cleared for release, the "no" path is followed to step 765.

In this case, the process then returns to step 715 where the next algorithm is checked. In particular, the process moves to step 730 where the process determines if the multilateral algorithm has been configured. In the case that the multilateral algorithm has been configured, the "yes" path is followed to step 735C where the multilateral queue is selected. This is described with reference to Fig. 7B.

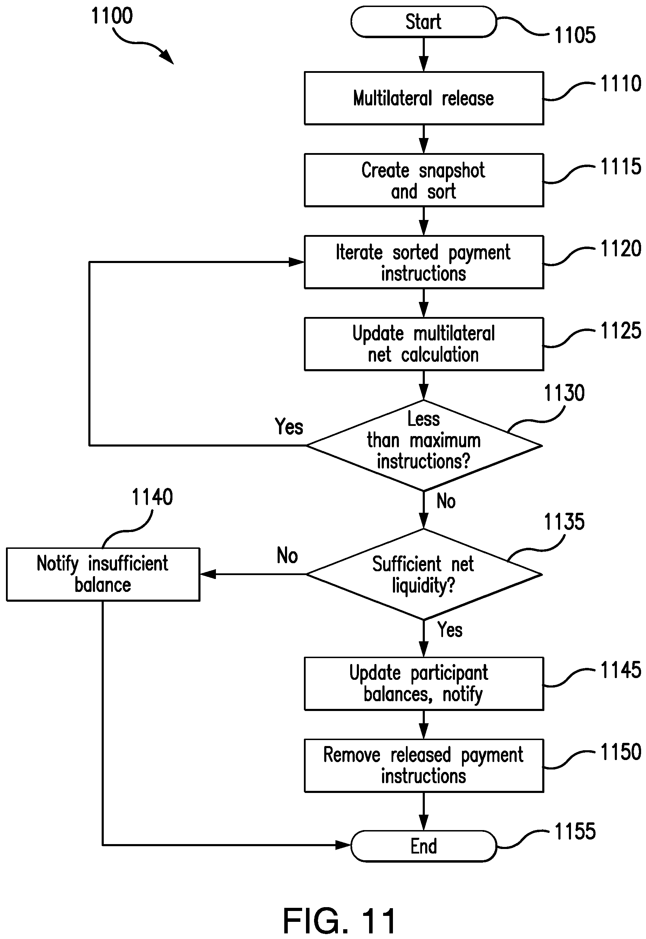

The process then moves to step 1100 where it is determined if the multilateral algorithm release can be carried out. This will be explained with reference to Fig. 11.

The process then moves to step 760 where, similarly to the bilateral and gross algorithms, the messages in the batch are cleared and it is determined if the maximum number of messages have been cleared for release. In the event that the maximum number of messages have been cleared for release, the process moves back to step 1100 and the "yes" path is followed. On the other hand, if the maximum number of messages has not been cleared for release, the "no" path is followed to step 765.

In step 765, it is determined whether any further algorithms have been configured. In the event that no further algorithms have been configured, the "no" path is followed to step 770 where the process ends.

Referring to Fig. 7B, the queue selection step of 735A/B/C of Fig. 7A is explained.

The process starts at step 7135. The process then moves to the queue selection at step 7140. In this case, the appropriate queue (i.e. the pending or immediate queue) is selected to be passed into the bilateral algorithm, the gross algorithm or the multilateral algorithm respectively during release.

The process then moves to step 7145 where the queue configuration of the pending queue or the immediate queue is checked. In this case, if the queue to check is the pending queue, the process moves to step 7150 where the message queue having all the pending payment instructions is selected. This means that the pending queue is passed into the respective algorithm. The process then moves to step 7160 where the process ends.

Returning to step 7145, in the event that the queue configuration determines the immediate queue is checked, the immediate payment instructions queue 7155 is selected to be fed into the algorithm. This queue will contain messages that have been promoted as well as messages having an urgent priority. The process then moves to step 7160 where the process ends.

This mechanism is advantageous because each different algorithm (i.e. gross, bilateral or multilateral) can see different message queues. This means that liquidity may be more efficient resulting is less likelihood of an automatic notification. Specifically, the gross algorithm could be passed the immediate queue as this means payments that have been promoted or are Urgent and require clearing immediately. This is because the bilateral and multilateral algorithms are more liquidity efficient as messages are held for a longer period of time.

Moreover, another embodiment allows the bilateral algorithm to be passed the pending queue where the messages have been sat on the pending queue for a predetermined period of time. This means that messages that are not on the immediate queue (as they have not been promoted as explained in Fig. 8 or are not marked as Urgent priority) may be passed to the bilateral algorithm for processing.

Referring to Fig. 8, a process 800 according to embodiments of the disclosure relating to the promotion check of Fig. 3 is explained. In this embodiment, the promotion check process 800 determines whether the newly received message should be promoted. In other words, the promotion check process 800 determines whether the message should be additionally copied to the immediate queue (thus existing on both the pending queue and the immediate queue) and therefore the associated transaction be settled more urgently than other transactions.

The process 800 starts at step 805 and is called when a new message arrives. The process receives the message in step 810. The process then moves to step 815 where the process determines if it is the end of the working day. In other words, the process in step 815 checks the current time and if the current time is later than a certain time, and so settlement is required, the "yes" path is followed to step 830 where the received instruction that is being checked is placed on the immediate pending queue. This is step 830.

Of course, although step 815 is a check to see if the current time is later than a certain time, the disclosure is not so limited. Indeed, there may be other times when immediate settlement is required. For example, if the current time is within a predetermined period of the end of a settlement cycle, immediate settlement may be required.

In the event that it is not the end of the day, or at one of the certain times, the "no" path is followed to step 820. In step 820, the process determines if the priority associated with the message is urgent. This priority is set by the financial institution or the issuer of the message and is identified in the Priority Code part of an ISO 20022 message or the like. This may be Urgent, High or Normal as noted above.

In the event that the priority is marked as Urgent (or an equivalent priority meaning settlement is required immediately), the "yes" path is followed and the message is copied onto the immediate queue in step 820.

On the other hand, if the priority is not marked as Urgent, the process moves to step 825 where the time for which the message has been located on the pending queue is checked. In the event that the message has been located on the queue for a period of time greater than a timeout period, the "yes" path is followed and the message is copied onto the immediate queue at step 830.

On the other hand, if the length of time for which the message has been situated on the pending queue is not greater than the timeout period, the "no" path is followed and the process ends at step 835.

After step 830, where the electronic message is copied on the immediate queue, the process moves to step 835 where the process ends.

Referring to Fig. 9, a flowchart 900 showing the bilateral release mechanism is shown.

The process starts at step 905. The process moves to step 910 where a bilateral release has been triggered. The process then moves to step 915 where a snapshot of the messages of the appropriate priority within the bilateral algorithm is created. By providing a snap-shot, this means other messages may be received into the bilateral algorithm whilst the bilateral release is being carried out. This is particularly advantageous in an asynchronous system where messages are received continuously.

The snap shot collection is sorted based on an algorithm sorting rule. This algorithm sorting rule may be, for example, the arrival time of the message within the system of Fig. 1, the net differences between the transactions associated with the messages or the priority associated with each of the messages.

In embodiments of the disclosure, the sorting rule is the net value of the transactions associated with the messages for a particular mapping key. So, for example, all the messages having the AB mapping key are sorted by net value.

The process then moves to step 920. In step 920, the selection of each of the sorted messages is iterated. This allows the messages sorted in Fig. 4 to be matched. In other words, the algorithm tries to identify stored messages that closely match one or more criterion. Such criterion may be, for example, the most closely aligned net value or the like.

After a message is selected, the process then moves to step 925 where for each selected message from the sorted collection, the closest match is selected. The optimal match tolerance is also checked to ensure that the closest match is within a predetermined tolerance. For example, the optimal match tolerance may be defined as a predetermined percentage difference between the transactions associated with various messages. For example, the most suitable bilateral match may be a transaction associated with an existing message that is identical to the transaction associated with the newly arrived message but which goes in the opposite direction. This results in a zero requirement for liquidity. However, the disclosure is not so limited and other criteria may be applied instead of or in addition.

The process then moves to step 935 where the value of transactions associated with a particular bank, with any netting (offsetting) provided by the bilateral match, is calculated. In other words, for each bank, the total amount of post-netting transactions is then compared to its liquidity limit. In particular, the check in step 935 ensures that the amount of liquidity does not fall below a predetermined amount. This means that the liquidity check in step 935 ensures that the amount of liquidity of the bank does not fall below zero (or another predetermined amount). In the event that there is insufficient liquidity, the "no" path is followed to step 930 and the process issues an alert to notify the bank that they have insufficient liquidity. This is achieved through an automatic notification which ensures that the bank is automatically notified should the net liquidity drop below a certain threshold, such as zero or another amount. The bank can then take steps to rectify this by providing further liquidity. The process then returns to step 920.

It is possible delay the issuance of the automatic notification for a short period of time. This is because the process is an iterative process through the snap-shot of messages and later messages may reverse the net position of a bank. In other words, by delaying the issuance of the automatic notification by a predetermined period of time (for example, 3 minutes) a later bilateral match may mean that the bank does have sufficient liquidity and so further liquidity is not required. As the insertion of further liquidity is, in embodiments, a trigger event, by reducing the number of instances of insertion of further liquidity, the amount of processing required within the device 100 and the payment system more generally is reduced.

In the event that there is sufficient liquidity in step 935, the "yes" path is followed to step 940 where the messages are deleted from the sorted snapshot and the participant (i.e. debtor and creditor) bank balances are updated. The originating payment system is also notified.

The process then moves to step 945. In step 945, a check is made to see if the number of messages to be released in the bilateral release is below a threshold. In the event that the number of messages is below a threshold, the "yes" path is followed back to step 920. However, in the event that there is the maximum number of messages, the "no" path is followed.

In the event the "no" path is followed, the process then moves to step 950 where the matched payment instructions are removed from the bilateral algorithm message queue and the messages are released.

The process then moves to step 955 where the process ends.

Referring to Fig.10, the process for the gross release algorithm 1000 is described.

The process starts at step 1005. The process moves to step 1010 where a gross release has been triggered. The process then moves to step 1015 where a snapshot of the messages having the selected priority on the message queue within the gross algorithm is created. By providing a snap-shot, this means other messages may be received into the gross algorithm whilst the gross release is being carried out. This is particularly advantageous in an asynchronous system where messages are received continuously.

The snap shot collection is sorted based on an algorithm sorting rule. This algorithm sorting rule may be, for example, the arrival time of the message within the system of Fig. 1.

The process then moves to step 1020. In step 1020, the selection of each of the sorted messages is iterated.

The process then moves to step 1025 where the value of transactions associated with a particular bank is calculated. In other words, for each bank, the total amount of transactions is then compared to its liquidity limit. In particular, the check in step 1025 ensures that the amount of liquidity does not fall below a predetermined amount. This means that the liquidity check in step 1025 ensures that the amount of liquidity of the bank does not fall below zero (or another predetermined amount). In the event that there is insufficient liquidity, the "no" path is followed to step 1030 and the process issues an alert to notify the bank that they have insufficient liquidity. This is achieved through an automatic notification which ensures that the bank is automatically notified should the net liquidity drop below a certain threshold, such as zero or another amount. The bank can then take steps to rectify this by providing further liquidity. The process then returns to step 1020.

Similar to the process in Fig. 9, it is possible delay the issuance of the automatic notification for a short period of time. This is because the process is an iterative process through the messages and later messages in the snap-shot may reverse the net position of a bank. In other words, by delaying the issuance of the automatic notification by a predetermined period of time (for example, 3 minutes) a later message may mean that the bank does have sufficient liquidity and so further liquidity is not required. As the insertion of further liquidity is, in embodiments, a trigger event, by reducing the number of instances of insertion of further liquidity, the amount of processing within the system is reduced.

In the event that there is sufficient liquidity in step 1025, the "yes" path is followed to step 1035 where the messages are deleted from the sorted snapshot and the participant (i.e. debtor and creditor) bank balances are updated. The originating payment system is also notified.

The process then moves to step 1040. In step 1040, a check is made to see if the number of messages to be released in the gross release is below a threshold. In the event that the number of messages is below a threshold, the "yes" path is followed back to step 1020. However, in the event that there is the maximum number of messages, the "no" path is followed.

In the event the "no" path is followed, the process then moves to step 1045 where the matched payment instructions are removed from the gross algorithm message queue and the batch of messages are released.

The process then moves to step 1050 where the process ends.

Referring to Fig. 11, the multilateral release mechanism 1100 is shown. The process starts at step 1105. The process moves to step 1110 where a multilateral release has been triggered. The process then moves to step 1115 where a snapshot of the messages on the message queue having the appropriate priority within the multilateral algorithm is created. By providing a snap-shot, this means other messages may be received into the multilateral algorithm whilst the multilateral release is being carried out. This is particularly advantageous in an asynchronous system where messages are received continuously.

The snap shot collection is matched based on an algorithm matching rule. This algorithm matching rule may be, for example, the arrival time of the message within the system of Fig. 1, the net differences between the transactions associated with the messages or the priority associated with each of the messages.

In embodiments of the disclosure, the matching rule is the net value of the transactions associated with the messages for a particular mapping key or set of mapping keys. So, for example, all the messages having the AB mapping key and BC mapping key are sorted by net value. This would allow netting between banks A, B and C.

The process then moves to step 1120. In step 1120, the selection of each of the sorted messages is iterated. This allows the sorted messages to be matched. In other words, the algorithm tries to identify stored messages that closely match one or more criterion. Such criterion may be, for example, the most closely aligned net value between the bank A and B, B and C or A and C or the like.

After a message is selected, the process then moves to step 1125 where for each selected message from the sorted collection, the closest match is selected. In this case, the optimal match may be a message having a transaction amount within a predetermined tolerance of the selected message. For example, the optimal match tolerance may be defined as a predetermined percentage difference between the transactions associated with various messages. For example, the most suitable multilateral match may be a message that is identical to the transaction associated with the newly arrived message but which goes in the opposite direction. This results in a zero requirement for liquidity. However, the disclosure is not so limited and other criteria may be applied instead or in addition.

The process continues so that the value of transactions associated with a particular bank, with any netting (offsetting) provided by the multilateral match, is calculated.

The process then moves to step 1130 where a check is made to determine if the number of messages in the multilateral release is less than a predetermined number. In the event that the number of messages in the multilateral release is less than a predetermined number, the "yes" path is followed back to step 1120. However, in the event that there are a predetermined number of messages, the "no" path is followed to step 1135.

In step 1135, for each bank, the total amount of post-netting transactions is then compared to its liquidity limit. In particular, the check in step 1135 ensures that the amount of liquidity does not fall below a predetermined amount. This means that the liquidity check in step 1135 ensures that the amount of liquidity of the bank does not fall below zero (or another predetermined amount).

In the event that there is insufficient liquidity, the "no" path is followed to step 1140 and the process issues an alert to notify the bank that they have insufficient liquidity. This is achieved through an automatic notification which ensures that the bank is automatically notified should the net liquidity drop below a certain threshold, such as zero or another amount. The bank can then take steps to rectify this by providing further liquidity. The process then ends at step 1155.

As noted above, it is possible delay the issuance of the automatic notification for a short period of time. This is because the process is an iterative process through the messages and later messages may reverse the net position of a bank. In other words, by delaying the issuance of the automatic notification by a predetermined period of time (for example, 3 minutes) a later multilateral match may mean that the bank does have sufficient liquidity and so further liquidity is not required. As the insertion of further liquidity is, in embodiments, a trigger event, by reducing the number of instances of insertion of further liquidity, the amount of processing within the system is reduced.

In the event that there is sufficient liquidity in step 1135, the "yes" path is followed to step 1145 where the messages are deleted from the sorted snapshot and the participant (i.e. debtor and creditor) bank balances are updated. The originating payment system is also notified.

The process then moves to step 1150 where the matched payment instructions are removed from the multilateral algorithm message queue and the messages are released.

The process then moves to step 1155 where the process ends.

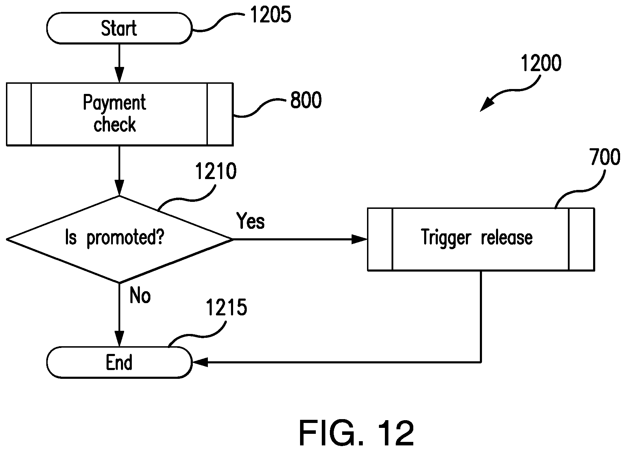

Referring to Fig. 12, the promotion process 1200 is described. This process is independent of the liquidity saving mechanism and periodically checks for payment instructions that should be promoted from the pending queue to the immediate queue. In other words, the promotion process 1200 checks the messages on the pending queue to identify messages that should be copied to the immediate queue.

The process starts at 1205 and is triggered by a scheduled process. For example, the promotion process may occur periodically (at a predetermined period) or at a set time during a day. The promotion check from Fig. 8 is carried out.

The process moves to step 1210 where the message is checked to see if it should be promoted. In the event that the promotion check indicates that the promotion should take place, the "yes" path is followed to step 700 as described above with reference to Fig. 7A. The release process of Fig. 7A will be run. The process then moves to step 1215 where the process ends.

Returning to step 1210, in the event that no promotion occurs, the process ends at step 1215.

Although the device 100 has been described with respect to processing financial transaction messages, it will be appreciated that the device 100 could be used for processing and storing any kind of data unit.

Although the foregoing has been described with reference to a bank, the disclosure also relates to any institution for example that transacts money such as a credit card company or the like.

Although the above discusses sending the notification to the bank, the disclosure is not so limited. For example, the notification may be sent to the payment system which may, in turn, notify the bank. Alternatively, or additionally, other interested parties such as a Regulator may be notified.

Although the foregoing has been described with reference to a transaction requests, the disclosure is not so limited and any kind of electronic message is envisaged. Obviously, numerous modifications and variations of the present disclosure are possible in light of the above teachings. It is therefore to be understood that within the scope of the appended claims, the disclosure may be practiced otherwise than as specifically described herein.

Although the above describes a device running a single instance of the algorithm of Fig. 3, the disclosure is not so limited. There may be a plurality of instances of the algorithm of Fig. 3 running on device 100. In particular, in embodiments, one instance may be designated the master instance which clears funds with settlement finality and other instances may be modelling instances. Each of these instances will receive the messages. In other words, the master instance and each of the modelling instances will receive the messages from step 234. The modelling instances will use various configurations of gross, multilateral or bilateral algorithm to determine an optimised liquidity saving. In other words, the configuration of one or more of the gross algorithm, multilateral algorithm and the bilateral algorithm is selected and modified to reduce the likelihood of the issuance of a notification warning that a financial institution will exceed its liquidity level. This testing within the modelling instances occurs in parallel with the master instance so that the configuration of the master instance may be adjusted depending on the outcome of the modelling instance(s). Of course, it is possible to test on a modelling instance any changes that are proposed to be applied to configuration of the master instance. This allows the real-time understanding of the impact of any configuration changes before they are applied to the master instance.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A method comprising:
receiving a first instruction from a first user, the first instruction being an instruction to transfer a first value from a first institution to a second institution;
receiving a second instruction from a second user, the second instruction being an instruction to transfer a second value from the second institution to the first institution,
wherein the first value is greater than the second value;
calculating the difference between the first value and the second value; and
comparing the calculated difference to a predetermined amount, wherein if the calculated difference is greater than the predetermined amount, the method comprises:
automatically notify the second institution.

2. The method according to claim 1, further comprising:
selecting the first value and the second value from a plurality of other values, the selection being based on the difference between the first value and the second value being the lowest compared to the other values.

3. The method according to either claim 1 or claim 2, further comprising:
delaying the notification to the second institution by a predetermined period of time.

4. The method according to any preceding claim, wherein the first value and second value are monetary values and the predetermined amount is the liquidity value of the second institution.

5. The method according to any preceding claim, wherein the first instruction and the second instruction are a subset of a batch of instructions, the method comprising: filtering the batch of instructions based upon the identity of the institution from which the instruction originates.

6. The method according to claim 5, further comprising: applying a mapping to the first instruction and the second instruction, the mapping identifying the first institution and the second institution; and filtering the batch of instructions based upon the mapping.

7. The method according to claim 6, further comprising: sorting the filtered batch of instructions based upon the value.

8. A computer program product comprising computer readable instructions which, when loaded onto a computer, configures the computer to perform a method according to any preceding claim.

9. An apparatus comprising communication circuitry and processing circuitry, the processing circuitry being configured to:
receive, via the communication circuitry, a first instruction from a first user, the first instruction being an instruction to transfer to a first value from a first institution to a second institution;
receive, via the communication circuitry, a second instruction from a second user, the second instruction being an instruction to transfer a second value from the second institution to the first institution, wherein the first value is greater than the second value;
calculate the difference between the first value and the second value; and
compare the calculated difference to a predetermined amount, wherein if the calculated difference is greater than the predetermined amount, the processing circuitry being configured to:
automatically notify the second institution.

10. The apparatus according to claim 9, wherein the processing circuitry is further configured to:
select the first value and the second value from a plurality of other values, the selection being based on the difference between the first value and the second value being the lowest compared to the other values.

11. The apparatus according to either claim 9 or claim 10, wherein the processing circuitry is further configured to: delay the notification to the second institution by a predetermined period of time.

12. The apparatus according to any one of claims 9 to 11, wherein the first value and second value are monetary values and the predetermined amount is the liquidity value of the second institution.

13. The apparatus according to any one of claims 9 to 12, wherein the first instruction and the second instruction are a subset of a batch of instructions, and the processing circuitry is further configured to: sort the batch of instructions based upon the identity of the institution from which the instruction originates.

14. The apparatus according to claim 13, wherein the processing circuitry is configured to: apply a mapping to the first instruction and the second instruction, the mapping identifying the first institution and the second institution; and sort the batch of instructions based upon the mapping.

15. The apparatus according to claim 14, wherein the processing circuitry is configured to: sort the filtered batch of instructions based upon the value.
